# FASCICULE DE BREVET EUROPEEN

(11) **EP 0 537 037 B1**
(45) Date de publication et mention de la délivrance du brevet: **02.07.1997**
(21) Numéro de dépôt: 92402476.3
(22) Date de dépôt: 10.09.1992
(51) Int. Cl.: B01D 17/035, B03D 1/16

(54) **Goulotte d'écrèmage pour dispositif de séparation par flottation et appareil flottateur utilisant une telle goulotte**
Schaumüberlauf für Flotationsvorrichtung und Flotationsvorrichtung, welche einen derartigen Überlauf enthält
Froth removal weir for a froth flotation separation device and a flotation device containing such a weir

(30) Priorité: 03.10.1991 FR 9112197
(43) Date de publication de la demande: 14.04.1993
(73) Titulaire: CECA S.A., 92800 Puteaux (FR)
(72) Inventeur: Hamdan, Adnan, F-64000 Pau (FR)
(74) Mandataire: Haicour, Philippe

(56) Documents cités:
- EP-A- 0 415 121
- DE-A- 3 808 154
- FR-A- 2 605 898
- FR-A- 2 610 915
- GB-A- 810 521
- US-A- 2 274 658
- US-A- 4 043 912

## Description

La présente invention concerne un dispositif pour la séparation par flottation de liquides non miscibles. Elle s'adresse plus particulièrement au traitement des eaux polluées par des hydrocarbures.

Il est connu de traiter de tels mélanges d'eaux et d'hydrocarbures par flottation, soit par air dissous (systèmes D.A.F., mis pour "dissolved air flotation"), soit par air ou gaz induit (systèmes I.A.F., mis pour "induced air flotation"). Dans les dispositifs I.A.F., l'induction d'air ou de gaz est générée soit par des injecteurs, soit par des turbines de type rotor-stator. C'est à cette dernière catégorie d'appareils qu'appartient le dispositif selon la présente invention. On connaît ainsi des flottateurs de type I.A.F. fonctionnant grâce à l'injection d'air ou de gaz par turbine, qui sont constitués d'une cuve cylindrique aménagée en une ou plusieurs zones passives dans lesquelles s'opèrent la tranquillisation ou la décantation des huiles, et en une ou plusieurs zones actives au sein desquelles un ensemble rotor/stator fonctionne comme dispositif d'injection d'air de flottation, et qui débouchent sur un ou plusieurs puits collecteurs récoltant les écumes formées dans les compartiments actifs. On trouve des informations sur de tels dispositifs dans des notices de constructeurs et dans divers brevets, par exemple le brevet français n° 2 605 898.

Les turbines, dont le rôle est de provoquer par la rotation du rotor une dépression dans la cheminée qui les surmonte, d'aspirer ainsi le gaz de couverture et de le projeter contre le stator créant ainsi autour du stator le nuage de gaz qui assurera la flottation, sont simplement constituées selon l'art antérieur d'un rotor à pales mobiles à l'intérieur de la cage d'un stator à doigts de section rectangulaire. Ces engins présentent un certain nombre d'inconvénients:
a) instabilité du débit d'air ou de gaz, due à la rupture du profil d'écoulement diphasique dans la cheminée du rotor: le rotor tourne en milieu diphasique eau/air, ce qui a pour conséquence une fluctuation considérable de la puissance électrique absorbée;
b) remontée périodique du vortex jusqu'au point d'aspiration d'air, entraînant des projections d'eau sur les mousses dont elles provoquent la redissolution partielle;
c) effet de flottation non assuré avec des turbines traitant des débits supérieurs à 10 m³/h, qui ne fonctionnent plus qu'en agitateurs, la dépression créée par le rotor n'étant plus suffisante pour entraîner le gaz de couverture jusqu'au stator;
d) impossibilité de faire varier le rapport du débit d'eau au débit d'air ou de gaz.

De ce fait, et bien que leur fonctionnement à l'échelle pilote soit acceptable, les matériels décrits dans l'art antérieur, lorsqu'ils sont réalisés à l'échelle des unités industrielles, ne procurent plus un effet de flottation satisfaisant.

Les goulottes d'écrémage selon l'art antérieur sont des systèmes autostables. Toutefois, elles ne sont dotées d'aucune possibilité de réglage de leur immersion, leur périmètre d'écrémage est très faible, leur horizontalité se maintient fort difficilement et leur flottaison est incertaine, c'est-à-dire que la goulotte peut sortir partiellement de l'eau, ou bien couler; il en résulte que l'écrémage des écumes est très imparfait et que l'appareil devient totalement inutilisable après quelques semaines de fonctionnement.

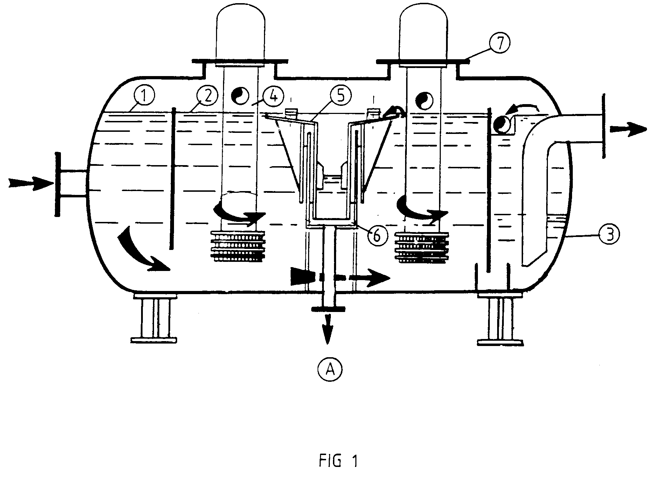

L'appareil selon l'invention permet de remédier à ces inconvénients. Il est constitué (fig.1) d'une cuve cylindrique ou rectangulaire divisée par des cloisons en plusieurs compartiments distincts : un compartiment d'homogénéisation du débit d'alimentation (1), des cellules de flottation (2) et un compartiment de tranquillisation (3), le cas échéant suivi d'un pot assurant la fonction de joint hydraulique avec l'extérieur.

Chaque cellule est munie d'une cyclone-turbine (4) et d'une goulotte d'écrémage auto-stable (5) en commun avec une cellule adjacente. La goulotte peut se déplacer verticalement grâce à un puits d'écrémage (6) dont les parois fixes (47) qui lui servent de guide-support.

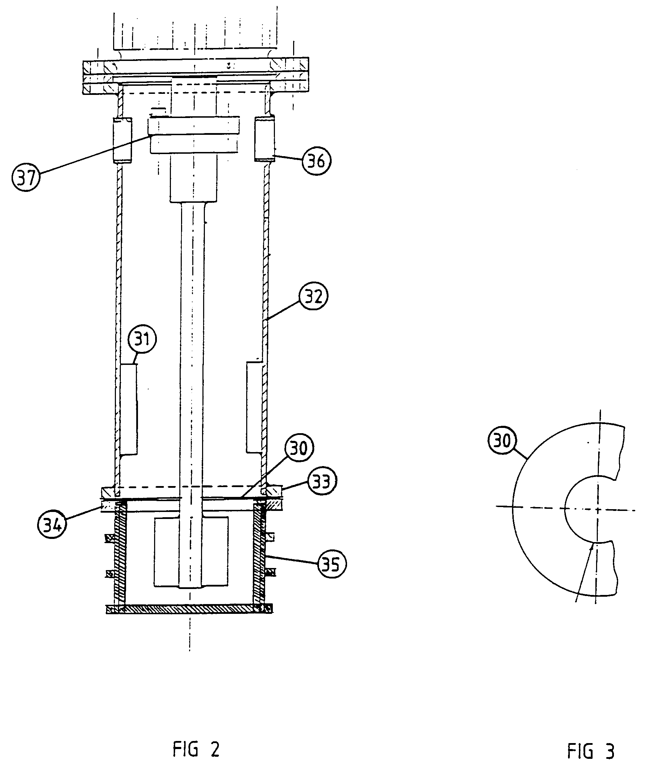

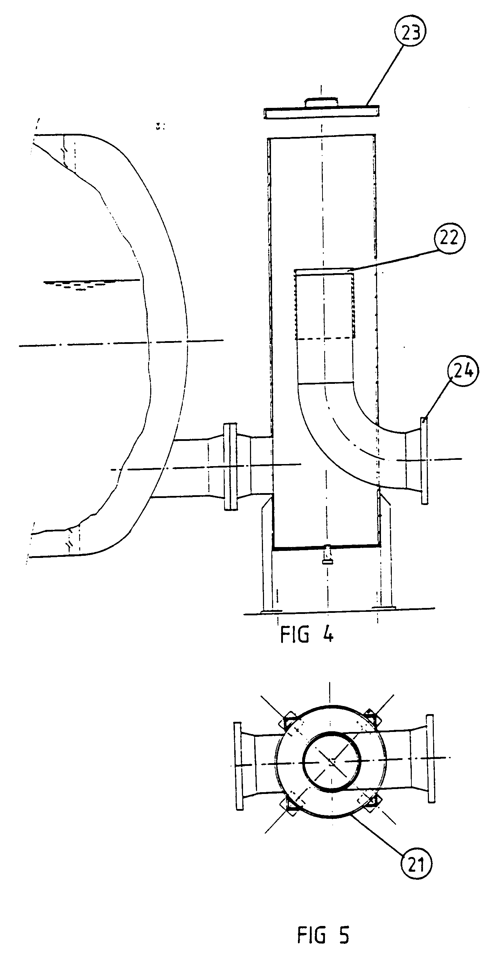

Les cyclones-turbines (fig. 2 et 4) sont du type stator-rotor. Elles sont équipées chacune d'un disque d'étranglement (30) permettant de créer une dépression suffisante pour vaincre la colonne d'eau au-dessus du rotor. Ce disque (fig. 2 et 3), d'une épaisseur de quelques millimètres, est monté en sandwich entre les brides de la cheminée et de la cage d'écureuil (35). Il peut être en acier inoxydable, d'un diamètre approximativement égal au diamètre extérieur du rotor. Des chicanes (31) sont soudées sur les parois internes de la cheminée du rotor (32); de préférence au nombre de trois, elles sont disposées symétriquement à une trentaine de centimètres de la bride (33-34); on les réalisera plutôt en acier; à titre indicatif, leurs dimensions sont comprises entre 100 X 40 X 6 mm et 200 X 60 X 4 mm. Elles permettent d'obtenir un profil d'écoulement en vortex stable. Le dimensionnement d'une cyclone-turbine se fait à partir de plusieurs données hydrodynamiques principales, à savoir:
- la vitesse tangentielle à l'extrémité du rotor, cette vitesse étant constante permet de lier numériquement le diamètre à la vitesse de rotation du rotor;
- les dimensions de la cellule, en relation avec le temps de séjour dans l'appareil;
- le débit et les propriétés physiques du liquide à traiter.

La puissance absorbée par la turbine ainsi que la vitesse critique du rotor sont calculées à partir des propriétés mécaniques du rotor et des caractéristiques des fluides à traiter. A titre d'exemple, les cyclones-turbines peuvent traiter des débits allant jusqu'à 100 m³/h d'eau en générant un débit diphasique global de 300 à 800 m³/h ; la puissance absorbée par turbine peut varier, selon le débit à traiter de 0,5 à 16 kW.

La conjugaison de la vitesse tangentielle du rotor avec le disque d'étranglement et les chicanes de stabilisation du vortex permet à la turbine de générer un écoulement diphasique gaz/eau régulier. Le rapport des débits eau/gaz est de l'ordre de trois. Une traverse de cheminée (36) a pour but d'empêcher la montée du vortex et en conséquence, la projection d'eau sur les mousses formées à l'extérieur de la cheminée. A noter que l'emploi de telle turbines-cyclones perfectionnées n'est pas limité aux flottateurs, mais peut s'étendre à toute application de transfert gaz-liquide.

Le stator (35) de la cyclone-turbine selon l'invention est avantageusement construit en polypropylène lorsque la température du fluide à traiter doit rester inférieure à 50°C, ou en fibre de verre ou acier pour des températures de fonctionnement prévues jusqu'à 110°C; le rotor, qui est en matériau ordinaire (acier inox ou acier revêtu), comporte un nombre plutôt réduit de pales, préférentiellement compris entre quatre et sept. En outre, ces cyclones-turbines sont montées de façon à ce qu'il soit possible de leur faire adopter l'une ou l'autre d'une position haute ou basse, la position haute étant la position ordinaire et la position basse pouvant être obtenue en intercalant une pièce entre les brides de l'accouplement (37). Pour une vitesse donnée du rotor, l'épaisseur de cette pièce permet d'agir directement sur le débit de gaz.

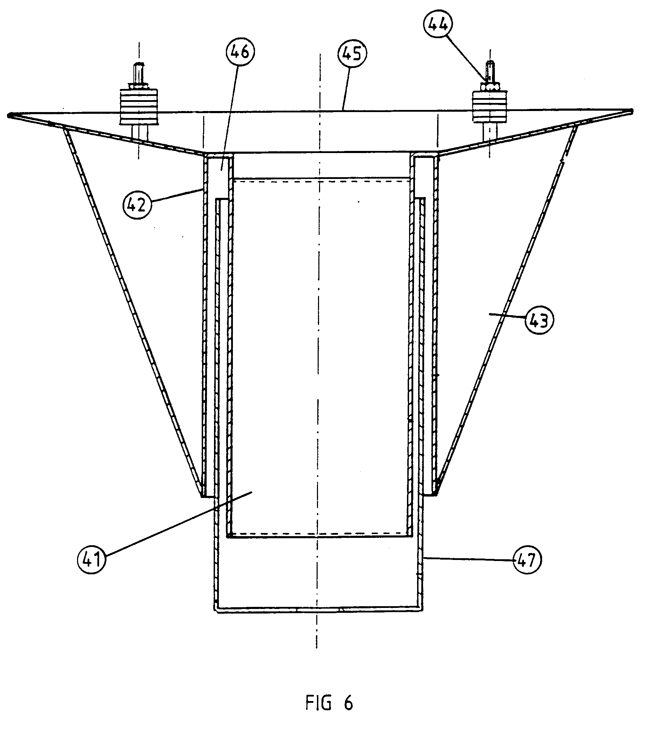

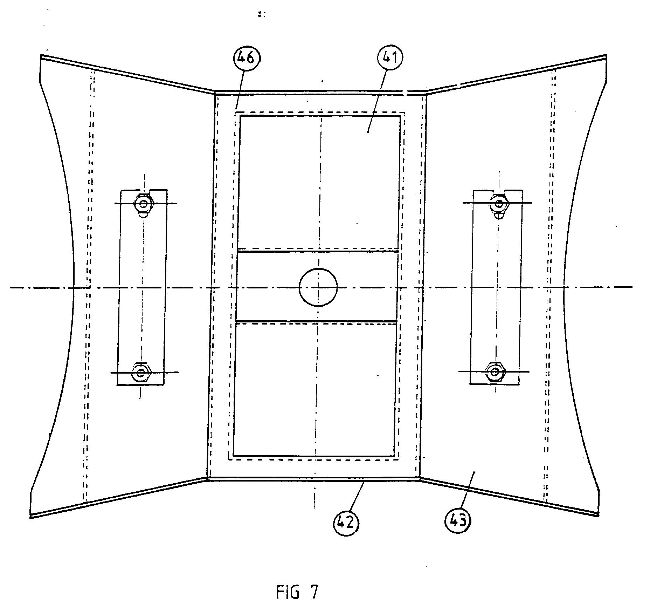

Les goulottes perfectionnées (fig. 6 et 7) selon l'invention comportent deux flotteurs verticaux (41), une jupe extérieure (42), de deux flotteurs latéraux (43) auxquels la jupe sert de guidage et deux ensembles contrepoids (44). L'écrémage des écumes se fait d'une façon homogène sur le large périmètre de la goulotte (45), et les écumes récupérées sont évacuées (A) par le fond du puits.

Les dimensions des goulottes tiennent compte des facteurs suivants:
- dimensions globales du flottateur,
- débit des écumes,
- domaine de variation du débit d'eau à traiter,
- dimensions des brides supports des cyclones turbines (7),
- volume des flotteurs verticaux (41), latéraux (43) et du volume d'air ou de gaz retenu dans l'espace compris entre la jupe externe (42) et les flotteurs et qui constitue le joint pneumatique (46).

Les dimensions des flotteurs obéissent aux principes suivants:
a) la somme des volumes des flotteurs verticaux et latéraux multipliée par la densité du liquide à traiter doit être supérieure au poids total de la goulotte;
b) la sortie des volumes moyens des flotteurs verticaux et latéraux et du joint pneumatique multipliée par la densité du liquide à traiter doit être égale au poids totale de la goulotte quand elle est en position haute. Pour l'ingénieur, ces principes seront traduits en équations à plusieurs inconnues, dont la résolution ne peut se faire que par le choix d'un certain nombre de cotes, telles que les dimensions des flotteurs internes.

Le poids réel de la goulotte nue doit rester légèrement plus faible que le poids théorique; l'équilibre en sera réalisé en rajoutant des contrepoids. Recourir à cette solution des contrepoids présentent les avantages suivants:
- facilité pour le concepteur de la goulotte de résoudre numériquement ces deux équations en procédant à des simplifications de premier ordre;
- souplesse au niveau du fonctionnement, car s'agissant d'un milieu fortement aéré, sa densité apparente est différente de celle de l'eau à traiter, surtout à la surface de l'écoulement;
- correction facile du réglage de l'immersion et de l'horizontalité de la goulotte dont le poids se modifie en fonctionnement par encrassement par des produits bitumineux ou autres, en jouant sur les contrepoids sans perturbation du fonctionnement global du flottateur.

Les goulottes sont construites en inox ou en tout autre matériau capable de résister à l'agressivité du milieu (salinité élevée, présence d'hydrocarbures, H₂S, CO₂, etc...). Si la construction peut être réalisée en matière plastique, il faudra l'alourdir par un lestage de billes de plomb. Ces goulottes fonctionnent pratiquement sans contrôle et ne nécessitent aucune intervention. Cet avantage se répercute sur le fonctionnement général du flottateur dont la maintenance est quasiment nulle.

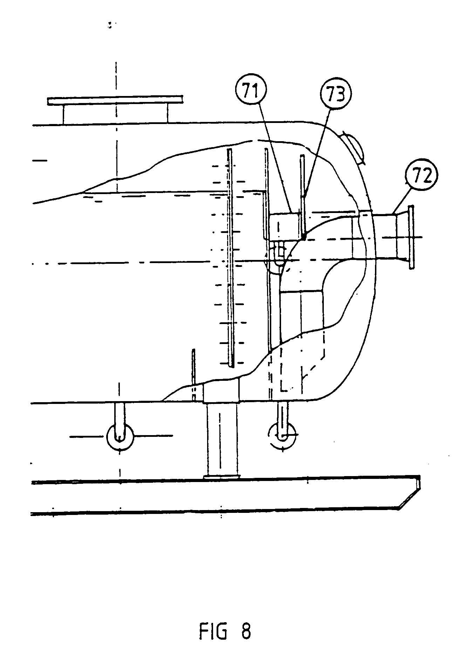

Le dernier compartiment de la cuve (3) assure une fonction de tranquillisation de l'effluent et permet de séparer les gouttelettes d'huiles de taille supérieure à environ 60 micromètres qui ont échappé à la dernière cellule de flottation. La tranquillisation est obtenue dans ce compartiment (voir figure 8) grâce à une retenue hydraulique maintenue par la disposition du tuyau de sortie (72). Les huiles décantées sont récupérées par une goulotte à seuil réglable (71); le siphonnage de l'eau est rendu impossible par un tube de mise à l'atmosphère (73). L'écrémage des huiles se fait soit en continu ou soit par intermittence.

Dans le cas d'une installation fonctionnant sous couverture de gaz, le compartiment de tranquillisation est complété par un pot (21) installé en aval du flottateur (voir figures 4 et 5) et qui en assure l'étanchéité. Le niveau d'eau dans le compartiment (3) auquel il est raccordé est réglé grâce à un seuil réglable (22) accessible par la partie haute (23) de l'équipement. Le corps du pot est constitué d'un tube de diamètre approximativement égal à deux fois le diamètre du tuyau de sortie (24). Le seuil (22) est raccordé au tuyau de sortie par un pas de vis hélicoïdal, et son élévation se fait très aisément en le tournant dans un sens ou dans l'autre. La hauteur d'eau dans le pot et l'élévation de ce dernier sont déterminées de façon à vaincre la pression du gaz de couverture (qui est de l'ordre de quelques dizaines de millibars). Cette solution est particulièrement avantageuse parce qu'elle simplifie considérablement l'architecture de la cuve cylindrique du flottateur, d'où il résulte une amélioration du fonctionnement de l'appareil dont le dernier compartiment est essentiellement consacré à l'écrémage des huiles qui s'y sont décantées et une appréciable économie de construction. En outre, elle économise des organes aussi délicats qu'un détecteur de niveau et une vanne de régulation auquel l'art antérieur faisait appel pour l'aménagement du joint hydraulique.

Ainsi réalisés, ces dispositifs d'injection d'air induit sont des appareils perfectionnés grâce auxquels il est maintenant possible de contrôler correctement le débit de l'air ou du gaz et le rapport eau/air (gaz), et de maîtriser la production des mousses. Ces matériels sont relativement légers, de construction économique et raisonnablement consommateurs d'énergie.

## Revendications

1. Goulotte d'écrémage (5) pour l'équipement de dispositifs de séparation d'eaux et de polluants hydrocarbonés par flottation par air induit dans lesquels il existe un puits (6) pour la collecte des écumes sur les parois duquel ladite goulotte peut coulisser verticalement en les coiffant et en formant un emboîtement formant joint pneumatique et portant deux flotteurs centraux (41) fixés sur les parois internes de l'emboîtement, caractérisée en ce qu'elle comporte également deux flotteurs latéraux (43) fixés sur l'extérieur de l'emboîtement, la paroi extérieure duquel étant formée par les parois internes de ces flotteurs latéraux (43) complétées par une jupe (42) reliant entre eux sur l'extérieur lesdits flotteurs latéraux (43), en ce que les parois internes des flotteurs latéraux (43), les parois des flotteurs centraux (41) qui ne sont pas en regard l'une de l'autre et la jupe (42) déterminent l'espace (46) formant joint pneumatique, dans lequel elle coulisse sur les parois fixes (47) du puis (6) et en ce que ladite goulotte est munie de contrepoids.

2. Appareil flottateur pour la séparation d'eaux et de polluants hydrocarbonés par flottation par air induit comportant des cellules de flottation (2) avec puits pour la collecte des écumes, caractérisé en ce que le puits est coiffé d'une goulotte selon la revendication 1, qu'il comporte en outre pour la génération de l'air induit des cyclones-turbines du type rotor/stator constituées d'un rotor à pale à l'intérieur de la cage d'un stator à doigts de section rectangulaire surmontée d'une cheminée, et qu'il comporte un disque d'étranglement sous la forme d'une plaque percée d'une ouverture et située de façon amovible entre la cage du stator et la cheminée qui la surmonte, le diamètre de l'ouverture étant inférieur aux diamètres internes du stator et de la cheminée, et des chicanes sous la forme de plaquettes rectangulaires fixées longitudinalement et symétriquement sur une partie basse de la paroi de la cheminée.

## Claims

1. Skimming duct (5) for equipping devices for the separation of water and hydrocarbon contaminants by induced air flotation, in which devices there is a well (6) for collecting the froth products, along the walls of which well the said duct can slide vertically, resting on them and forming a recess forming a pneumatic seal and carrying two central floats (41) fixed to the internal walls of the recess; characterized in that it also includes two side floats (43) fixed to the outside of the recess, the outer wall of which recess being formed by the internal walls of these side floats (43), these internal walls being completed by a skirt (42) connecting the said side floats (43) together on the outside; in that the internal walls of the side floats (43), the walls of the central floats (41) which are not facing each other, and the skirt (42) define the space (46) forming the pneumatic seal, in which space the said duct slides along the fixed walls (47) of the well (6); and in that the said duct is provided with counterweights.

2. Float apparatus for the separation of water and hydrocarbon contaminants by induced air flotation, which includes flotation cells (2) with a well for collecting the froth products; characterized in that a duct according to Claim 1 rests on the well; in that it furthermore includes, for generating the induced air, cyclone-turbines of the rotor/stator type which consist of a bladed rotor inside the cage of a stator having fingers of rectangular cross-section, this cage being surmounted by a riser; and in that it includes a throttling disc in the form of a plate drilled with an opening and located removably between the cage of the stator and the riser which surmounts it, the diameter of the opening being less than the internal diameters of the stator and of the riser, and baffles in the form of small rectangular plates fixed longitudinally and symmetrically to a lower part of the wall of the riser.

## Patentansprüche

1. Schaumüberlauf (5) für die Ausstattung von Flotationstrennvorrichtungen zur Abtrennung von Wasser und kohlenwasserstoffhaltigen Verunreinigungen mittels zugeführter Luft, wobei in diesen Vorrichtungen ein Schacht (6) zum Auffangen des Schaums vorgesehen ist, wobei an den Wandungen dieses Schachtes (6) sich der Überlauf vertikal verschieben lassen kann und dabei die Wandungen überdeckt und eine ineinandergreifende, verschachtelte Verbindung herstellt, die eine pneumatische Dichtung ausbildet und zwei zentrale Schwimmkörper (41) trägt, die an den inneren Wandungen der ineinandergefügten Verbindung fixiert sind, dadurch gekennzeichnet, daß er gleichermaßen zwei seitliche Schwimmkörper (43) enthält, die an der Außenseite der ineinandergreifenden Verbindung fixiert sind, deren äußere Wandung von den inneren Wandungen dieser seitlichen Schwimmkörper (43) gebildet werden, die mit einer Schürze (42) abschließen, die sie untereinander mit der Außenseite dieser seitlichen Schwimmkörper (43) verbindet; daß die inneren Wandungen der seitlichen Schwimmkörper (43), die Wandungen der zentralen Schwimmkörper (41), die einander nicht gegenüberstehen, und die Schürze (42) den Abstand (46) bestimmen, der die pneumatische Dichtung ausbildet, in der sich der Überlauf an den festen Wandungen (47) des Schachtes (6) bewegt; und daß der Überlauf mit einem Gegengewicht versehen ist.

2. Flotationsapparatur zur Abtrennung von Wasser und kohlenwasserstoffhaltigen Verunreinigungen mittels Flotation durch zugeführte Luft, enthaltend Flotationszellen (2) mit einem Schacht zum Auffangen des Schaumes, dadurch gekennzeichnet, daß der Schacht mit einem Überlauf gemäß Anspruch 1 bedeckt ist, daß er außerdem zur Generierung der zugeführten Luft Zyklonturbinen (Wirbelturbinen) vom Rotor/Stator-Typ umfaßt, die aus einem Blattrotor im Inneren des Gehäuses eines Stators mit Zapfen mit rechtwinkligem Schnitt bestehen, über dem ein Schacht angeordnet ist, und daß er eine Scheibe zum Durchlaß in Form einer mit einer Öffnung durchbohrten Scheibe, die sich in herausnehmbarer Weise zwischen dem Gehäuse des Stators und dem Schacht befindet, der auf dem Gehäuse befindlich ist, wobei der Durchmesser der Öffnung kleiner als die inneren Durchmesser des Stators und des Schachtes ist, und Ablenkvorrichtungen in Form rechtwinkliger Platten umfaßt, die der Länge nach und symmetrisch auf einem unteren Teil der Wandung des Schachtes befestigt sind.
